# EUROPEAN PATENT APPLICATION

(11) **EP 4 068 179 A1**
(43) Date of publication of application: **05.10.2022**
(21) Application number: 22161872.1
(22) Date of filing: 14.03.2022
(51) Int. Cl.: G06Q 10/06

(54) **ANALYSIS APPARATUS, ANALYSIS METHOD, AND PROGRAM**

(30) Priority: 26.03.2021 JP 2021054400
(71) Applicant: Yokogawa Electric Corporation, Musashino-shi, Tokyo 180-8750 (JP)
(72) Inventor: Ema, Nobuaki, Tokyo, 180-8750 (JP); Kambe, Takahiro, Tokyo, 180-8750 (JP); Seki, Tatenobu, Tokyo, 180-8750 (JP); Annen, Masato, Tokyo, 180-8750 (JP)
(74) Representative: Grünecker Patent- und Rechtsanwälte PartG mbB

(57) **Abstract**

It is preferable to be able to analyze the advantage of changing some work used to operate a plant. Provided is an analysis apparatus including: a work cost calculation unit configured to calculate a change of a work cost of a target plant, when at least some target work is changed or at least some additional target work is provided among items of work of an operator which are required to operate the target plant; an operational value analysis unit configured to analyze an operational value which depends on at least one of an amount or a quality of a deliverable or an emission produced by an analysis target plant under a specified condition; and a value comparison unit configured to compare a first work cost and a first operational value when the target work is not changed or the additional target work is not provided, with a second work cost and a second operational value when the target work is changed or the additional target work is provided.

## Description

### BACKGROUND

### 1. TECHNICAL FIELD

The present invention relates to an analysis apparatus, an analysis method, and a computer-readable medium having recorded thereon a program.

### 2. RELATED ART

In the related art, a method for determining optimal work for minimizing a work cost of maintenance work of a plant or the like, is known (for example, refer to Patent Document 1).

Patent Document 1: Japanese Patent Application Publication No. 2013-29881

### SUMMARY

### TECHNICAL PROBLEM

It is preferable to be able to analyze the advantage of changing some work used to operate a plant.

### GENERAL DISCLOSURE

A first aspect of the present invention provides an analysis apparatus. The analysis apparatus may include a work cost calculation unit configured to calculate a change of a work cost of a target plant, when at least some target work is changed or at least some additional target work is provided among items of work of an operator which are required to operate the target plant. The analysis apparatus may include an operational value analysis unit configured to analyze an operational value which depends on at least one of an amount or a quality of a deliverable or an emission produced by an analysis target plant under a specified condition. The analysis apparatus may include a value comparison unit configured to compare a first work cost and a first operational value when the target work is not changed or the additional target work is not provided, with a second work cost and a second operational value when the target work is changed or the additional target work is provided.

The work cost calculation unit may calculate the second work cost for each of a plurality of work patterns in which at least either items of the target work, or contents of the change or the addition are different from each other. The operational value analysis unit may calculate the second operational value for each of the plurality of work patterns.

The analysis apparatus may further include a pattern extraction unit configured to extract at least one work pattern based on each second work cost and each second operational value.

The analysis apparatus may include a related work storage unit configured to store a plurality of items of related work, among the items of work of the operator, in association with each other. The analysis apparatus may include a pattern generation unit configured to generate the plurality of work patterns based on the plurality of items of related work.

The work cost calculation unit may calculate the first work cost based on a first workload of the operator when the target work is not changed or the additional target work is not provided. The work cost calculation unit may calculate the second work cost based on a second workload when the target work is changed or the additional target work is provided.

The analysis apparatus may include a work history storage unit configured to store a history of work performed by the operator during an operation of the target plant. The work cost calculation unit may calculate the first workload based on the history of the work stored by the work history storage unit.

The analysis apparatus may include a work history storage unit configured to store a history of work performed by the operator during an operation of an existing plant. The work cost calculation unit may calculate the first workload and the second workload based on the history of the work stored by the work history storage unit.

The work history storage unit may store, when work in the existing plant is changed or additional work is provided, a history of the work before the change or the addition, and a history of the work after the change or the addition. The work cost calculation unit may calculate the first workload and the second workload based on the history of the work stored by the work history storage unit.

The analysis apparatus may include a risk storage unit configured to store risk assessment information for assessing a risk which occurs when a plurality of items of the target work of the target plant are changed or the items of additional target work are provided. The pattern extraction unit may extract the work pattern further based on the risk assessment information.

The risk storage unit may store, as the risk assessment information, information relating to a case where work in an existing plant is changed or additional work is provided.

The analysis apparatus may include a risk assessment generation unit configured to simulate an operation of target equipment which is a target of work, and generate the risk assessment information of the work, based on an actual operation result of the target equipment when the work is performed, and an operation result by the simulation.

The analysis apparatus may include a risk assessment generation unit configured to generate, for target equipment which is a target of work, the risk assessment information of the work on the target equipment, based on a difference between an intermediate manufactured product which is input to the target equipment and a processed manufactured product which is output by the target equipment.

A second aspect of the present invention provides an analysis method. The analysis method may include calculating a change of a work cost of a target plant, when at least some target work is changed or at least some additional target work is provided among items of work of an operator which are required to operate the target plant. The analysis method may include analyzing an operational value which depends on at least one of an amount or a quality of a deliverable or an emission produced by an analysis target plant under a specified condition. The analysis method may include comparing a first work cost and a first operational value when the target work is not changed or the additional target work is not provided, with a second work cost and a second operational value when the target work is changed or the additional target work is provided.

A third aspect of the present invention provides a program for causing a computer to execute the analysis method according to the second aspect.

The summary clause does not necessarily describe all necessary features of the embodiments of the present invention. The present invention may also be a sub-combination of the features described above.

### BRIEF DESCRIPTION OF THE DRAWINGS

Fig. 1 shows a configuration example of an analysis apparatus 100 that analyzes an operation of a plant.
Fig. 2 shows an example of information which is stored by a work cost storage unit 12.
Fig. 3 is a diagram showing an example of a work list.
Fig. 4 is a diagram showing another configuration example of the analysis apparatus 100.
Fig. 5 is a diagram describing an operation example of a work list generation unit 40.
Fig. 6 is a diagram showing another configuration example of the analysis apparatus 100.
Fig. 7 is a diagram showing another configuration example of the analysis apparatus 100.
Fig. 8 is a diagram showing another configuration example of the analysis apparatus 100.
Fig. 9 is a diagram showing an example of a plurality of work patterns.
Fig. 10 is a diagram showing another configuration example of the analysis apparatus 100.
Fig. 11 shows an example of a work history which is stored by a work history storage unit 14.
Fig. 12 shows another example of the work history which is stored by the work history storage unit 14.
Fig. 13 is a diagram showing another configuration example of the analysis apparatus 100.
Fig. 14 shows an example of risk assessment information which is stored by a risk storage unit 52.
Fig. 15 is a diagram showing an example of an analysis method for an analysis target plant.
Fig. 16 shows a configuration example of a computer 1200 in which a plurality of aspects of the present invention may be entirely or partially embodied.

### DESCRIPTION OF EXEMPLARY EMBODIMENTS

Hereinafter, the invention will be described through embodiments of the invention, but the following embodiments do not limit the invention according to claims. In addition, not all the combinations of features described in the embodiments are essential for means to solve the problem in the invention.

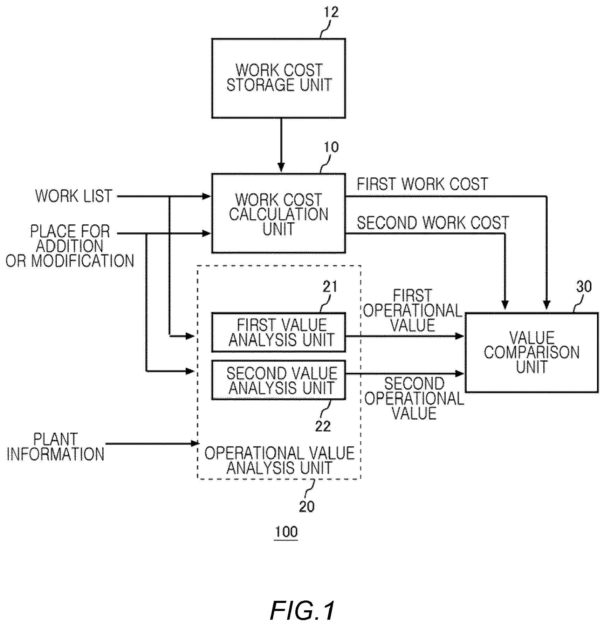

Fig. 1 shows a configuration example of an analysis apparatus 100 that analyzes an operation of a plant. The analysis apparatus 100 may analyze an operation of an existing plant, or may analyze the operation of a plant to be constructed in the future. The plant is, for example, at least a part of a facility such as a water treatment facility, a production facility, a power generation facility, and a storage facility. The plant that is an analysis target is referred to as a target plant. The target plant includes a provision of equipment, piping, and the like. In the present specification, unless otherwise explicitly distinguished, the provision of the equipment, the piping, and the like is simply referred to as equipment.

The analysis apparatus 100 of the present example is a computer that performs predetermined data processing. The computer may execute a program for causing the computer to function as each unit of the analysis apparatus 100.

The analysis apparatus 100 analyzes a change of a work cost of the target plant and a change of an operational value of the target plant in a case of change or addition of work of an operator which is required to operate the target plant. The work which is required to operate the target plant includes all items of work that affect a behavior or reliability of the target plant by performing the work. For example, the work includes work of directly operating a valve or the like of the equipment included in the target plant, work of indirectly controlling the equipment of the target plant by a control computer provided in the target plant, and work of controlling the equipment of the target plant by the computer or the like from a remote location. In addition, the work of the operator includes work of monitoring a state of the equipment of the target plant. In addition, the work of the operator includes work which does not directly affect the behavior of the target plant but which occurs accompanying an operation of the target plant, such as a communication to another operator. The work which is required to operate the target plant does not include work of constructing the target plant.

The work cost is a cost which is required to perform the work. The work cost may be expressed in an amount of money, or may be expressed in another unit. For example, the work cost may be expressed by a product (a so-called man-hour) of the number of people and a working time which are required for the work. The work cost may include an amount of resource such as electric power which is required for the work. The work cost may be a value obtained by converting a sum of a plurality of types of costs into an amount of money. The work cost may include a cost continuously incurring for each predetermined unit period, and may include a cost incurring at predetermined timing such as a start of the work.

The change of work means changing at least any of a method of the work, a material and equipment that are used in the work, or a result obtained by the work. For example, the change of work includes a case where the method of the work, the material, or the equipment is changed without substantially changing the result of the work. In addition, the change of work may include a case where the method of the work, the material, or the equipment is changed, and the result such as a quality or an amount of product is also changed. In addition, the change of work includes a case where the work performed by the operator is automated. The addition of work means adding work which is not currently being performed. By the addition of work, the amount or the quality of a deliverable or an emission of the plant may be changed. The addition or the change of work does not include maintenance of the equipment that is used for the work.

The automation of work means that some or all items of work, which have been performed by the operator, are automatically performed by a machine, a robot, a computer, or the like. The automated work may entirely be performed by the machine, the robot, the computer, or the like, or may be performed by the operator in collaboration with the machine, the robot, the computer, or the like. Each item of work may be automated such that the result produced by each item of work is the same before and after the automation, and each item of work may be automated such that the result is different.

The operational value of the plant depends on at least one of the amount or the quality of the deliverable or the emission produced during a target period. For example, the larger the amount of the deliverable, the higher the operational value. Similarly, the greater the amount of beneficial emission, the higher the operational value, and the larger the amount of unwanted emission, the lower the operational value. The amount of the deliverable or the emission may be at least any of a volume, a weight and energy.

The quality of the deliverable is a physical or chemical parameter which affects the value of a manufactured product, such as a composition, a property, or the like of the deliverable. The composition of the deliverable is, for example, purity or the like. The property of the deliverable is, for example, viscosity, density, transparency, or the like. The quality of the deliverable may be a yield of the deliverable (for example, a non-defective rate). In addition, the quality of the deliverable may also be a distribution of the composition or the property of the deliverable. For example, when the deliverables are classified into multiple grades based on the composition or the property, the quality of the deliverable may be a proportion of the deliverable which is classified into each grade. The quality of the emission is similar.

The operational value may be a value obtained by converting the deliverable into the amount of money, according to the amount or the quality of the deliverable. A unit price per unit amount of the deliverable may be constant regardless of production timing of the deliverable, or may vary depending on the production timing. The unit price for each production timing of the deliverable may be calculated based on a current market value, or may be calculated based on a demand forecast of the deliverable. The emission is similar. The operational value of the emission may include a cost which is required to process the emission. The cost may be constant regardless of emission timing of the emission, or may vary depending on the emission timing.

The analysis apparatus 100 includes a work cost calculation unit 10, an operational value analysis unit 20, and a value comparison unit 30. The analysis apparatus 100 may include a work cost storage unit 12.

The work cost calculation unit 10 calculates the change of the work cost of the target plant, when at least some target work is changed or at least some additional target work is provided among items of work of the operator which are required to operate the target plant. The work cost calculation unit 10 of the present example may receive a work list indicating all or some items of work of the operator which are required to operate the target plant, and information of a place for the addition or the change indicating which work is to be changed or which additional work is to be provided. The work list and the place for the addition or the change may be specified by a user of the analysis apparatus 100.

The work cost calculation unit 10 may calculate the change of the work cost based on a first workload of the operator when the target work is not changed or the additional target work is not provided, and a second workload of the operator when the target work is changed or the additional target work is provided. The workload of the operator is, for example, a product (the man-hour) of the number of people and the time which are required for the work.

The work cost storage unit 12 stores the information for calculating the work cost described above. For example, the work cost storage unit 12 may store the first workload when the plurality of items of work are not changed or the items of additional work are not provided, and the second workload when the plurality of items of work are changed or the items of additional work are provided. The work cost calculation unit 10 may calculate the change of the work cost between the case where the target work is not changed or the additional target work is not provided, and the case where the target work is changed or the additional target work is provided, based on the information stored by the work cost storage unit 12. The work cost calculation unit 10 may include, in the work cost of the target plant after the work change, the costs of the machine, the computer, and another apparatus that are used for the addition or the change of work. The work cost calculation unit 10 may search for an apparatus that is used for work change from a database storing data of an apparatus that can be diverted from another plant. The database may be provided in the analysis apparatus 100, or may be capable of being connected to the analysis apparatus 100 via a network. In the database, the cost in a case where each apparatus is used for the work change is stored. In the database, data of a surplus apparatus that is not used in another plant may be stored.

The operational value analysis unit 20 analyzes the operational value which depends on at least one of the amount or the quality of the deliverable or the emission produced by an analysis target plant under a specified condition. The operational value analysis unit 20 of the present example has a first value analysis unit 21 and a second value analysis unit 22. The first value analysis unit 21 analyzes a first operational value when the target work is not changed or the additional target work is not provided. The second value analysis unit 22 analyzes a second operational value when the target work is changed or the additional target work is provided. The specification of the conditions may be preset by the user of the analysis apparatus 100 or the like before the analysis, or may be appropriately set or changed during the analysis. The condition specifies an operational situation of the analysis target plant that can affect the operational value generated by the analysis target plant. The condition may be an operational period of the analysis target plant. In this case, the analysis apparatus 100 analyzes the operational value generated by the analysis target plant within the operational period. The condition may specify an amount of the deliverable or the emission. In this case, the analysis apparatus 100 may analyze the operational value based on a period which is required for the analysis target plant to produce the deliverable or the emission of the amount. For example, the analysis apparatus 100 may calculate the operational value to be higher as the period is shorter. It should be noted that the condition is not limited to these examples. The condition may specify a parameter for controlling each piece of equipment of the analysis target plant. Each of the value analysis units may use a predetermined simulation model to analyze the operations of the plant when the target work is not changed or the additional target work is not provided in the analysis target plant and when the target work is changed or the additional target work is provided. The simulation model may use a known model that can analyze at least any of the quality or the amount of the deliverable or the emission.

Plant information may be input to the operational value analysis unit 20. The information may be input by the user of the analysis apparatus 100. The plant information is information for producing the simulation model of the analysis target plant. The plant information may include information relating to a type, performance, a product number, and a connection relationship of each piece of equipment constituting the plant. The plant information may include a measured value of each sensor such as a temperature sensor and a pressure sensor provided in the analysis target plant. The plant information may include information such as a piping and instrumentation diagram (P&ID), or CAD data indicating an arrangement for the provision of the equipment, the piping, and the like.

The first value analysis unit 21 builds a first simulation model when the target work is not changed or the additional target work is not provided based on the plant information and the work list. The plant information may include information indicating the current operational value of the analysis target plant. For example, the plant information may include information of the quality or the amount of the deliverable or the emission which is currently being produced or capable of being produced by the analysis target plant. The plant information may include information such as an amount of raw material input to the analysis target plant, or may include information such as power consumption. The plant information may include information indicating the performance of each piece of equipment constituting the plant at a point of time of the analysis. The plant information may be input by the user of the analysis apparatus 100, or may be automatically acquired from the analysis target plant. This makes it possible to build the first simulation model simulating a characteristic of the plant at the point of time of the analysis. The plant information may include initial value information indicating an initial value of the performance of each piece of equipment constituting the plant at a time of constructing the plant, and history information indicating an operation history of the plant. The first value analysis unit 21 may build, from the initial value information and the history information, the first simulation model simulating the characteristic of the plant at the point of time of analysis. The first value analysis unit 21 may be given a deterioration model of each piece of equipment for simulating how each piece of equipment of the plant deteriorates by the operation history of the plant.

The work which is changed or the additional work which is provided may be input to the second value analysis unit 22. The second value analysis unit 22 builds a second simulation model when the target work is changed or the additional target work is provided based on the plant information, the work list, and the information of the place for the addition or the change. The second value analysis unit 22 may build a model changed with respect to the first simulation model built by the first value analysis unit 21, based on a work content of a target of the addition or the change.

The first value analysis unit 21 calculates, based on the first simulation model, the first operational value when the target work is not changed or the additional target work is not provided. The second value analysis unit 22 calculates, based on the second simulation model, the second operational value when the target work is changed or the additional target work is provided.

The value comparison unit 30 compares the first operational value and the first work cost, with the second operational value and the second work cost. For example, the value comparison unit 30 may compare a first difference value obtained by subtracting the first work cost from the first operational value, with a second difference value obtained by subtracting the second work cost from the second operational value. The value comparison unit 30 may calculate a difference between the two difference values described above. The value comparison unit 30 may calculate the operational value and the work cost over a predetermined period. The period may be specified by the user of the analysis apparatus 100, or a preset period may be used. The value comparison unit 30 may calculate a transition of a comparison result when the period is changed. The value comparison unit 30 may determine whether the second difference value is greater than the first difference value. A value obtained by subtracting the first difference value from the second difference value indicates a value that the target work is changed or the additional target work is provided. The value comparison unit 30 may display the comparison result, or may transmit the comparison result to an outside.

The analysis apparatus 100 may set, as the target plant, a plant that is already in operation. The analysis apparatus 100 may set, as the target plant, a plant that is at a design stage. The analysis apparatus 100 may determine whether to change each item of work or provide the additional work based on the comparison result of the value comparison unit 30.

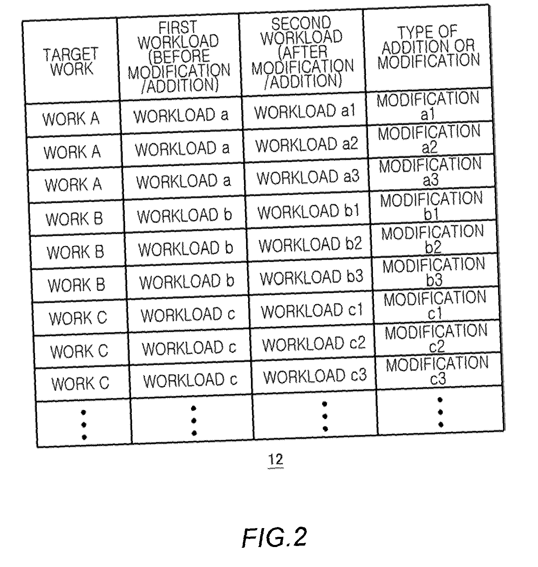

Fig. 2 shows an example of information which is stored by a work cost storage unit 12. The work cost storage unit 12 may store, for each item of work for operating the plant, the first workload before the addition or the change, a type of the addition or the change, and the second workload after the addition or the change. The type of the addition or the change refers to a difference in the type of the equipment, in the change of the performance of the equipment, in an operation procedure of the equipment, or the like in relation to the addition or the change. For example, in a case where the work is changed by automating the work, when each apparatus that is used for the automation has different performance and reliability, the workload, such as a monitoring burden of the operator after the automation, changes. In addition, when the work content is changed such that the same result can be obtained by different methods, the workload of the operator changes depending on what method is used.

The work cost storage unit 12 may store a plurality of types of the addition or the change for the same work. The work cost storage unit 12 may store the second workload for each type of the addition or the change. Even when the method of the addition or the change is different, the first workload before the addition or the change is the same, and thus the work cost storage unit 12 may store the same first workload for the same work even when the type of the addition or the change type is different. The work cost storage unit 12 may store the first workload, the second workload, and the type of the addition or the change of each item of work, based on a result of the addition or the change made to the work performed in the existing plant. The work cost storage unit 12 may store the first workload and the second workload analyzed by performing the simulation or the like, based on a content of the addition or the change.

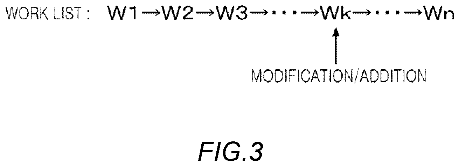

Fig. 3 is a diagram showing an example of a work list. The work list includes a plurality of items of work W1 to Wn. Each item of work may be arranged in chronological order according to order of work. Some work may be work which is performed in parallel with the other work. The analysis apparatus 100 analyzes the changes of the work cost and the operational value when one or more items of target work Wk included in the work list are changed or the items of additional target work are provided.

Each item of work included in the work list is structured to have independence so as not to directly affect the other work when each item of work is changed. Each item of work is structured such that the result of the work of an immediately previous stage or a stage before the immediately previous stage is input and such that processing according to the input is performed. The processing of each item of work does not depend on a processing method in the other work. That is, regardless of the processing method (for example, whether the processing is manual or automatic, the change of the parameter such as a processing temperature and a processing time, whether processing is performed in parallel in multiple lines or processing is performed in sequence in a single line, or the like) in the other work, processing which depends on an input result is performed.

For example, in a case where the work W1 is automated, when the processing of other items of work W2 to Wn is affected, not only the work cost of the work W1 but also the work cost of the other items of work W2 to Wn may vary. In this case, it is not possible to accurately analyze a variation of the work cost unless the change of the work cost of the entire work is analyzed. In contrast to this, by structuring each item of work such that each item of work has the independence as in the present example, it is possible to accurately analyze the change of the work cost of the entire work when only the work cost of the work which is changed or the additional work which is provided is analyzed.

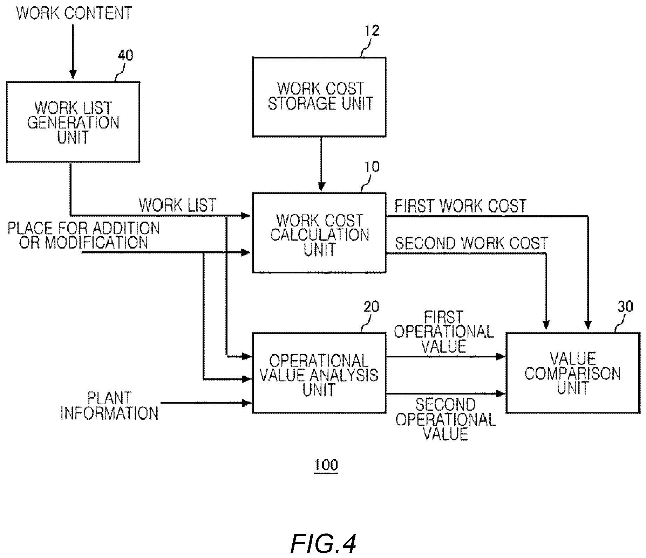

Fig. 4 is a diagram showing another configuration example of the analysis apparatus 100. The analysis apparatus 100 of the present example further includes a work list generation unit 40 with respect to the example shown in Fig. 1. Other configurations are similar to those of the analysis apparatus 100 described with reference to Fig. 1 to Fig. 3.

The work list generation unit 40 generates the work list described in Fig. 3. The work content of the operator for operating the target plant is input to the work list generation unit 40. The work content may indicate the content of each operation that is required of the operator. The work list generation unit 40 combines one or more operations into one item of work based on the content of each operation.

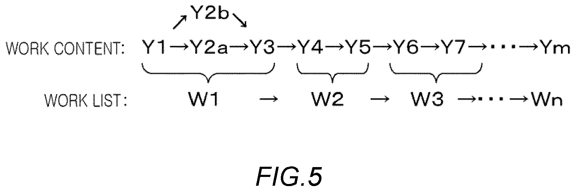

Fig. 5 is a diagram describing an operation example of a work list generation unit 40. Work contents including a plurality of operations Y1 to Ym arranged in chronological order are input to the work list. Each operation Y may be an operation on the equipment of the plant, for example, an operation of adjusting an opening degree of a valve, raising a temperature of the apparatus, or the like. The work content may be input from the user or the like of the analysis apparatus 100. The operation Y may include an operation of checking the state of the equipment of the plant, such as a screen display of a control device of the plant or checking of a sensor value.

The work list generation unit 40 combines one or more operations Y into one item of work W. The work list generation unit 40 detects, based on each operation content, another operation that is affected when a certain operation Y is changed. For example, in two operations, such as the operations Y2a and Y2b in Fig. 5, which need to be performed in parallel, a delay of one operation may delay an operation of the other. In such a case, the work list generation unit 40 detects these operations as operations that affect each other. The work list generation unit 40 performs a conversion on the operation contents for the work list such that the operations that affect each other are included in one item of work.

By such processing, each operation Y can be combined into the work W that has the independence. This makes it possible to accurately analyze the work cost when each item of work is changed or the additional work is provided.

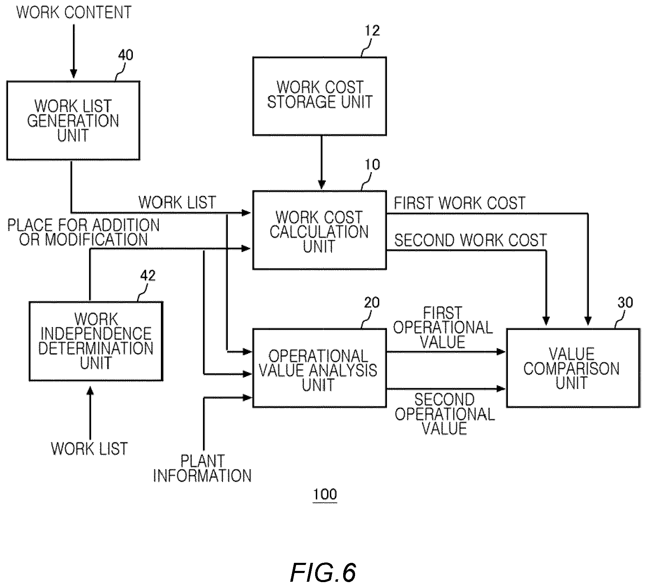

Fig. 6 is a diagram showing another configuration example of the analysis apparatus 100. The analysis apparatus 100 of the present example includes a work independence determination unit 42 in addition to the configurations of any of the analysis apparatuses 100 described with reference to Fig. 1 to Fig. 5. Other configurations are similar to those of the analysis apparatuses 100 of any of the aspects described with reference to Fig. 1 to Fig. 5. Fig. 6 illustrates a configuration in which the work independence determination unit 42 is added to the configuration of the analysis apparatus 100 shown in Fig. 1.

The work list is input to the work independence determination unit 42. The work list may be input from the user or the like of the analysis apparatus 100, or may be input from the work list generation unit 40 described with reference to Fig. 5. The work independence determination unit 42 determines whether each item of work included in the work list has the independence described above.

When some operation or parameter in the work Wx, which is the change target, is changed, the work independence determination unit 42 determines whether an output of the work Wz, which is work other than the work Wx and is a determination target, is changed. When the output of the work Wz, which is the determination target, is not changed, the work independence determination unit 42 may determine that the work Wz is independent of the work Wx. The work independence determination unit 42 may determine whether each item of work Wz, which is determination target, is independent of all items of work Wx which are the targets of the change. In another example, the work independence determination unit 42 may determine the independence of the work Wz with respect to all items of work Wx carried out before the work Wz which is the determination target, and may determine the independence of the work Wz with respect to the work Wx carried out immediately before the work Wz which is the determination target.

When the output (the result of the work) of the work Wx which is the change target has a relationship with the work Wz which is the determination target, the relationship of being used in the work Wz, the work independence determination unit 42 changes only the processing method of the work Wx which is the change target, and when it is assumed that the result of the work Wx is not changed, the work independence determination unit 42 may determine whether the output of the work Wz is changed. When the output of the work Wz is not changed, the work independence determination unit 42 may determine that the work Wz is independent of the work Wx.

The work independence determination unit 42 may select, as the work which is changed or the additional work which is provided, the work W having the independence with respect to all items of other work, and provide the notification to the work cost calculation unit 10 and the operational value analysis unit 20. In another example, the work independence determination unit 42 may attach, to the work list, information indicating the independence between the respective items of work, and output the work list. The work cost calculation unit 10 and the operational value analysis unit 20 may select, as the work of the target of the addition or the change, the work W having the independence with respect to all items of other work.

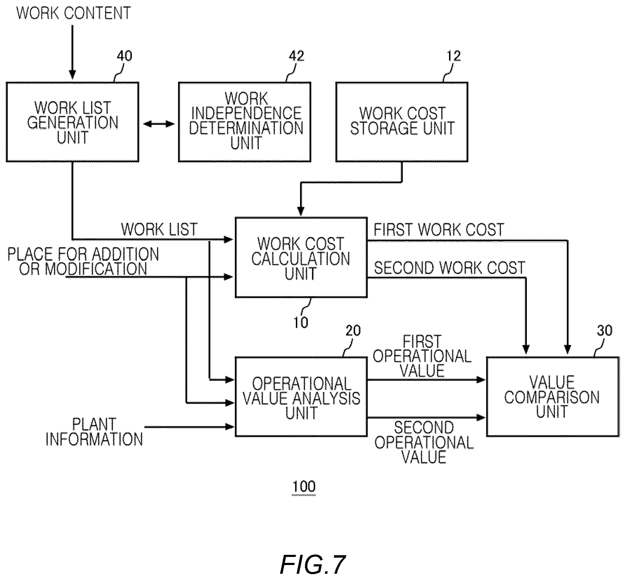

Fig. 7 is a diagram showing another configuration example of the analysis apparatus 100. The analysis apparatus 100 of the present example includes the work independence determination unit 42 in addition to the configuration of the analysis apparatus 100 described with reference to Fig. 4. Other configurations are similar to those of the analysis apparatus 100 of any aspect described with reference to Fig. 4. The work independence determination unit 42 of the present example may have a function similar to that of the work independence determination unit 42 described with reference to Fig. 6.

The work independence determination unit 42 of the present example determines whether each item of work, which is included in the work list generated by the work list generation unit 40, has the independence. When any work does not have the independence, the work independence determination unit 42 notifies the work list generation unit 40 to that effect. The work independence determination unit 42 may notify the work list generation unit 40 which work Wa does not have the independence with respect to which work Wb. In addition, the work independence determination unit 42 may notify the work list generation unit 40 which the work content Ya of the work Wa does not have the independence with respect to which the work content Yb of the work Wb.

When any work included in the created work list does not have independence, the work list generation unit 40 creates the work list again based on the notification from the work independence determination unit 42. For example, the work list generation unit 40 may combine, into one item of work, one set of work Wa and Wb determined to have no independence. In addition, the work list generation unit 40 may reassign a series of work contents Y to each item of work such that the one set of work contents Ya and Yb determined not to have the independence are included in the one item of work W. The work list generation unit 40 and the work independence determination unit 42 may repeat the creation of the work list and the determination of the independence until each item of work in the work list has the independence.

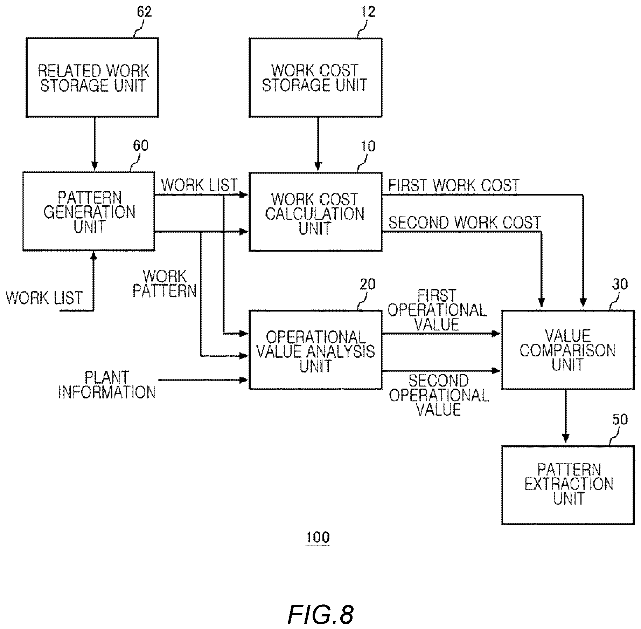

Fig. 8 is a diagram showing another configuration example of the analysis apparatus 100. The analysis apparatus 100 of the present example includes a related work storage unit 62, a pattern generation unit 60, and a pattern extraction unit 50 in addition to the configurations of any of the analysis apparatuses 100 described with reference to Fig. 1 to Fig. 7. Other configurations are similar to those of the analysis apparatuses 100 of any of the aspects described with reference to Fig. 1 to Fig. 7. Fig. 8 illustrates a configuration in which the related work storage unit 62, the pattern generation unit 60, and the pattern extraction unit 50 are added to the configuration of the analysis apparatus 100 shown in Fig. 1.

The pattern generation unit 60 of the present example generates a plurality of work patterns. A work pattern is a pattern in which one or more items of target work are changed or the items of additional target work are provided for the work list. The plurality of work patterns are patterns in which at least either the items of target work, or the contents of the change or the addition are different from each other.

The work cost calculation unit 10 of the present example calculates the second work cost for each of the plurality of work patterns. The operational value analysis unit 20 of the present example calculates the second operational value for each of the plurality of work patterns. The value comparison unit 30 may calculate a difference between the work cost and the operational value for each work pattern.

The pattern extraction unit 50 extracts at least one work pattern based on the second work cost (or the second workload) of each work pattern and the second operational value of each work pattern. The pattern extraction unit 50 may extract a work pattern having the greatest difference value obtained by subtracting the second work cost from the second operational value. The work pattern corresponds to a work pattern having the highest value.

The related work storage unit 62 stores a plurality of items of related work, among the items of work of the operator, in association with each other. The items of related work refer to, for example, when one purpose is achieved by cooperation between a plurality of items of work, the plurality of items of work. In this case, the plurality of items of related work may be included in one work list. In addition, the items of related work may be, in a case where one purpose can be achieved by any of the plurality of items of work, the plurality of items of work. In this case, one or more items of selected work, among the plurality of items of related work, are included in the one work list.

The pattern generation unit 60 generates the plurality of work patterns based on the plurality of items of related work stored by the related work storage unit 62. For example, when the plurality of items of related work can be selected as work of substituting the target work, the pattern generation unit 60 may generate the plurality of work patterns in which the items of target work are sequentially replaced with the respective items of related work. In addition, when there are the plurality of items of related work that achieve one purpose in cooperation with each other in the work list, the pattern generation unit 60 may generate the plurality of work patterns in which the respective items of related work are sequentially changed to other items of work. The pattern generation unit 60 may generate the plurality of work patterns in which a type of final manufactured product is common.

For example, when the purpose is to raise a temperature of the manufactured product at a certain point in the target plant for the manufactured product produced in the target plant, the following work can be considered.
- Work 1: an amount of heating is directly increased by a heater or the like at the point. That is, heating energy is increased.
- Work 2: a flow rate of cooling water to an upstream heat exchanger is reduced to raise temperatures of materials mixed in an upstream sector. That is, a cooling water valve is controlled in the upstream sector.
- Work 3: a movement speed (a rate of flow) of the manufactured product is lowered to lengthen a heating time of the manufactured product. That is, a compressor output for causing the manufactured product to flow is controlled.

Work 1 to work 3 correspond to the plurality of items of related work. In work 1, there is a possibility for energy consumption for heating to be increased. In work 2, until the temperature of the manufactured product rises, a time lag is larger than that in the other work, and thus there is a concern that a quality of the manufactured product may deteriorate during that time. In work 3, the movement speed of the manufactured product is slowed down, and thus there is a possibility that an amount of production per hour is reduced. Therefore, by carrying out these items of work in combination with each other, a demerit of each item of work may be reduced.

The pattern generation unit 60 may generate the plurality of work patterns in which the combinations of the plurality of items of related work are changed. For example, the pattern generation unit 60 may generate a work pattern including work 1 and work 2, and a work pattern including work 1 and work 3.

The pattern generation unit 60 may generate the plurality of work patterns in which the contents of the plurality of items of related work are changed. For example, in the work pattern including work 1 and work 3, the pattern generation unit 60 may raise (or lower) a heating temperature of work 1 to generate the plurality of work patterns in which the movement speed of the manufactured product in work 3 is slowed down (or caused to be fast).

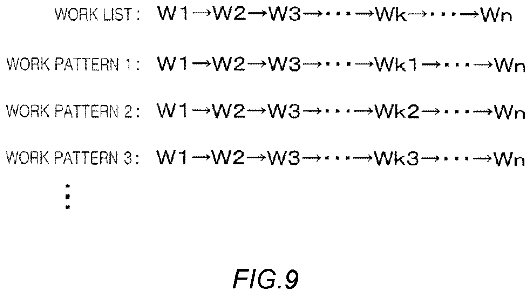

Fig. 9 is a diagram showing an example of a plurality of work patterns. The pattern generation unit 60 of the present example generates the plurality of work patterns in which the work Wk included in the work list is changed. The related work storage unit 62 of the present example stores a plurality of items of related work Wkl, Wk2, Wk3, ..., as alternative work of the work Wk. The pattern generation unit 60 sequentially selects each of the plurality of items of related work which can be selected as the alternative work of the work Wk, and generates the plurality of work patterns in which the work Wk is replaced with related work Wkn.

The work cost calculation unit 10 and the operational value analysis unit 20 calculate the work cost and the operational value for the work list and each work pattern. The pattern extraction unit 50 extracts any of the work patterns based on the respective work costs and operational values. By such an operation, the work pattern having the highest value can be presented to the user or the like, as a recommended work pattern.

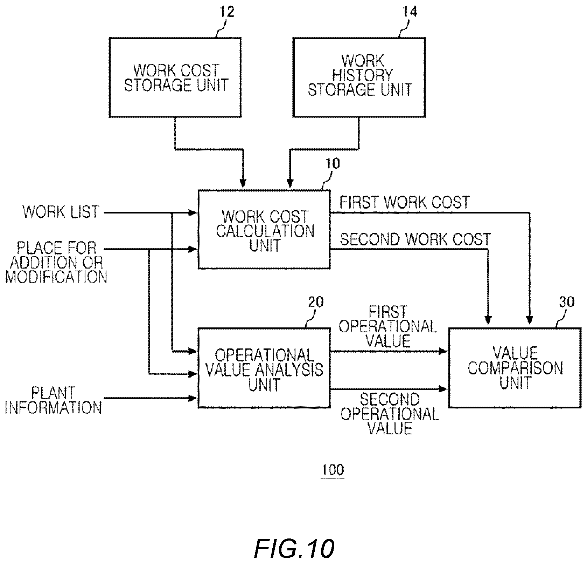

Fig. 10 is a diagram showing another configuration example of the analysis apparatus 100. The analysis apparatus 100 of the present example includes a work history storage unit 14 in addition to the configurations of any of the analysis apparatuses 100 described with reference to Fig. 1 to Fig. 9. Other configurations are similar to those of the analysis apparatuses 100 of any of the aspects described with reference to Fig. 1 to Fig. 9. Fig. 10 illustrates a configuration in which the work history storage unit 14 is added to the configuration of the analysis apparatus 100 shown in Fig. 1.

The work history storage unit 14 may store a history of work performed by the operator during the operation of the target plant. The work history storage unit 14 may store a history of work performed by the operator during the operation of the existing plant. The work cost calculation unit 10 of the present example may calculate at least one of the first workload or the second workload of each item of work based on the history of the work stored by the work history storage unit 14.

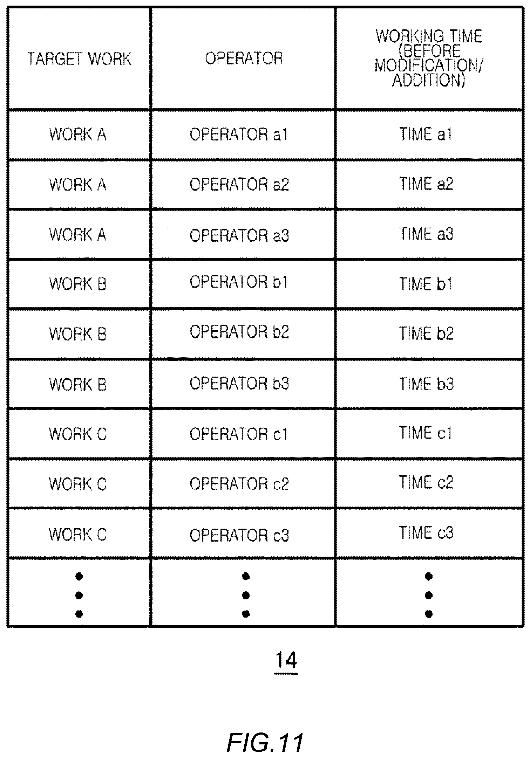

Fig. 11 shows an example of a work history which is stored by a work history storage unit 14. The work history storage unit 14 of the present example stores the work history in the target plant. The work history storage unit 14 may store identification information of the operator and the working time for each item of work. The work history storage unit 14 may store information indicating the number of people who performed the work. The work history storage unit 14 in the example of Fig. 11 stores the identification information of each operator when the work is performed by a plurality of people. In addition, the work history storage unit 14 may store an average working time when the same person repeatedly performed the work.

When the same work is performed by different operators, the work history storage unit 14 may store the history of the work for each operator. The work cost calculation unit 10 may use an average value of the working time for each operator, as the working time for the same work.

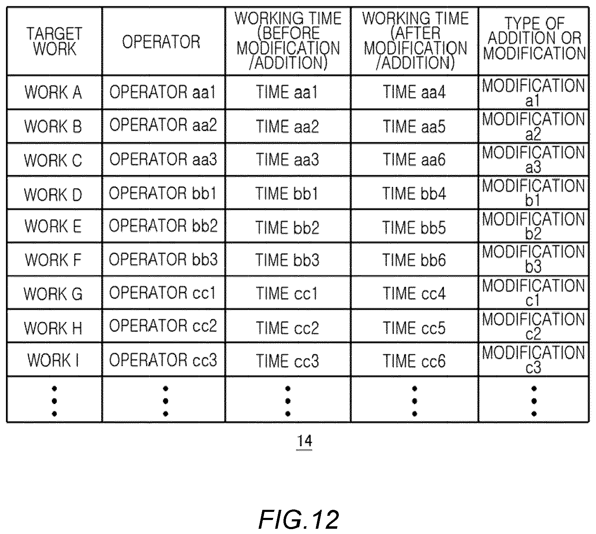

Fig. 12 shows another example of the work history which is stored by the work history storage unit 14. The work history storage unit 14 of the present example stores, when the work in the existing plant is changed or the additional work is provided, a history of the work before the addition or the change, and a history of the work after the addition or the change. In addition to the work history shown in Fig. 11, the work history storage unit 14 of the present example may store the working time after the addition or the change. That is, in the existing plant, the work history storage unit 14 of the present example stores a first working time before the addition or the change of each item of work, and a second working time after the addition or the change. This makes it possible to accurately detect, from a work result of the existing plant, a change of the working time by the addition or the change of work.

The work cost calculation unit 10 may extract, from the work history storage unit 14, work similar to the target work in the target plant. The work cost calculation unit 10 may calculate a degree of similarity between the target work and the work stored in the work history storage unit 14. The degree of similarity of the work may be calculated to be higher as an attribute of any of a type, a performance, a structure, and a size of target equipment is more similar. The degree of similarity of the work may be calculated to be higher as an attribute of either the content of the work, or the time required for the work is more similar. The similarity of work may be calculated to be higher as an attribute of any of a result product produced by the work, a parameter value output by the work, or a parameter value input in the work is more similar. The similarity of the attribute may be calculated by a predetermined arithmetic expression. The attribute described above may be preset for each item of work. The work history storage unit 14 may store the attribute.

In addition, the work history storage unit 14 may store the work history for each type of the addition or the change. That is, a plurality of work histories of different types of the addition or the change may be stored for the same work. The work cost calculation unit 10 may extract a work history similar to the type of the addition or the change to be performed for the target work. The similarity of the type of the addition or the change may be calculated to be higher as an attribute of any of the type of equipment used for the addition or the change, the performance of the equipment, and the operation procedure of the equipment is more similar.

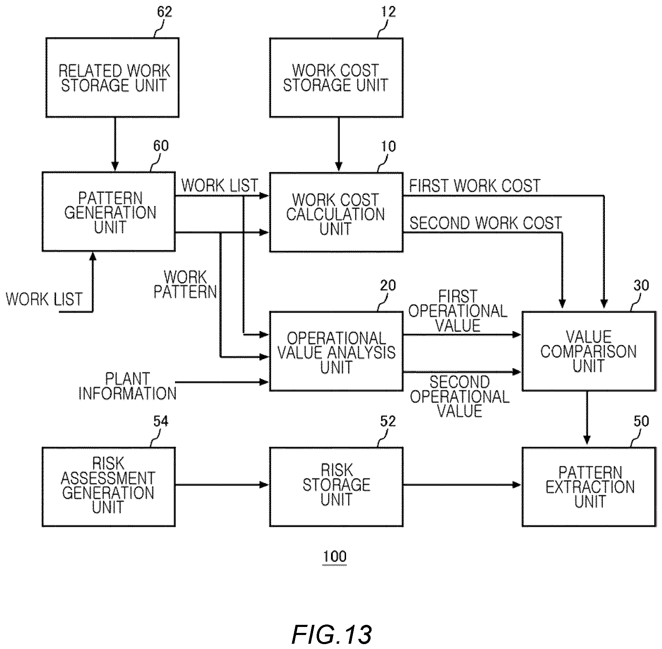

Fig. 13 is a diagram showing another configuration example of the analysis apparatus 100. The analysis apparatus 100 of the present example includes a risk storage unit 52 and a risk assessment generation unit 54 for the configuration of the analysis apparatus 100 described with reference to Fig. 8. Other configurations are similar to those of the analysis apparatus 100 described with reference to Fig. 8.

The risk storage unit 52 stores risk assessment information for assessing a risk which occurs when the plurality of items of target work of the target plant are changed or the items of additional target work are provided. The risk storage unit 52 may store information relating to a risk case such as a failure and a quality deterioration occurring due to the addition or the change of work in the existing plant. The "risk" in the present specification refers to a so-called negative risk by which a detrimental event is likely to occur. The risk storage unit 52 may store a risk assessment value that quantifies the risk when the work is changed or the additional work is provided. The risk storage unit 52 may store the risk assessment value for each type of the addition or the change of work. The pattern extraction unit 50 may calculate the risk assessment value based on the risk assessment information stored by the risk storage unit 52.

The risk assessment value may be calculated based on a probability that the risk case occurs when the work is changed or the additional work is provided, a repair cost of the equipment when the risk case occurs, a degree of a performance deterioration of the equipment, a period during which the equipment is stopped, a range of the equipment which is affected by the risk case, the quality deterioration of the product of the plant, a decrease in the amount of production, or the like. The risk assessment value is higher as the probability of the occurrence of the risk case is higher, and is higher as a loss when the risk case occurs is greater.

In addition, the risk assessment value may be calculated based on an operating frequency or an amount of the operation of the operator in the work. For the work in which the operating frequency or the amount of operation of the operator is small, the risk assessment value in the case of the addition or the change may be small.

The pattern extraction unit 50 extracts one or more recommended work patterns from the plurality of work patterns based on the risk assessment information stored by the risk storage unit 52. For example, the pattern extraction unit 50 may extract a work pattern in which the risk assessment value in the case of the addition or the change is included in a certain range.

The risk storage unit 52 may store the risk assessment information generated from a simulation result of the operation of the target equipment which is a target of work. The risk assessment generation unit 54 may perform the simulation and generate the risk assessment information. The risk assessment generation unit 54 may generate the risk assessment information when the work is changed or the additional work is provided, based on an actual operation result of the target equipment when the work is performed, and an operation result by the simulation. That is, the risk assessment generation unit 54 may set, as the risk assessment information, a comparison result between an actual operation of the target equipment and an estimated operation. In a case where a discrepancy between the actual operation and the estimated operation is small, a possibility that an irregular operation occurs is low even when the work is changed or the additional work is provided, and thus the risk assessment value in the case of the addition or the change may be estimated to be low. As the actual operation result, the operation result in the plant which is the analysis target may be used, or an operation result in similar work in the existing plant may be used.

In addition, the risk assessment generation unit 54 may generate, for the target equipment which is the target of the work, the risk assessment information for the addition or the change of work on the target equipment, based on a difference between an intermediate manufactured product which is input to the target equipment and a processed manufactured product which is output by the target equipment. The intermediate manufactured product and the processed manufactured product may be in a state of any of a liquid, a gas, or a solid. The difference between the intermediate manufactured product and the processed manufactured product may include any of the difference in the state described above, a difference in concentration of a specific substance, and a difference in the characteristic such as viscosity. These differences may be quantified according to a predetermined algorithm. When the difference between the intermediate manufactured product and the processed manufactured product of the work is small, an effect of the work on the final manufactured product is considered to be comparatively small, and thus the risk assessment value when the work is changed or the additional work is provided may be estimated to be small.

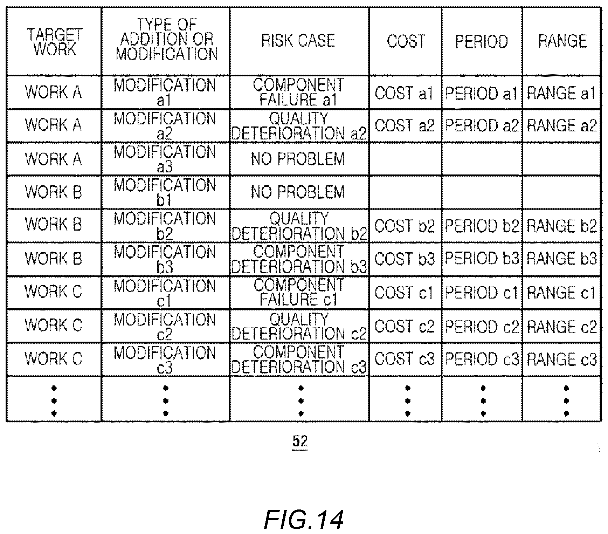

Fig. 14 shows an example of risk assessment information which is stored by a risk storage unit 52. The risk storage unit 52 stores, for each item of work, at least any of the type of the addition or the change performed in the existing plant, the risk case that has occurred, the cost incurred by the risk case, a period required for the risk case to be recovered, and the range of the equipment which is affected by the risk case. The risk storage unit 52 may also store, for each item of work, an example of the addition or the change for which no risk case has occurred. As described above, the risk storage unit 52 may store the risk assessment value in association with each type of the addition or the change. In addition, the risk storage unit 52 may store the risk assessment information calculated from the simulation result, or the risk assessment information generated from the difference between the intermediate manufactured product and the processed manufactured product of the target equipment.

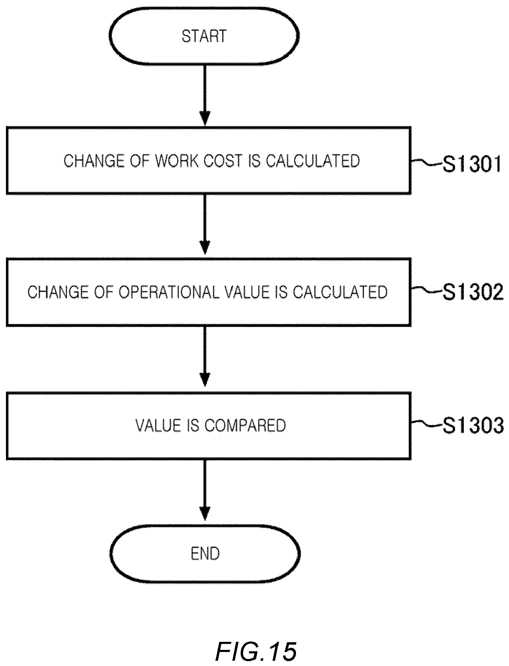

Fig. 15 is a diagram showing an example of an analysis method for an analysis target plant. Respective pieces of processing in the analysis method are similar to the operations of the analysis apparatuses 100 described with reference to Fig. 1 to Fig. 14.

First, the work cost calculation unit 10 calculates the change of the work cost before and after predetermined work is changed or the predetermined additional work is provided (S1301). In addition, the operational value analysis unit 20 calculates the change of the operational value of the plant when the work is changed or the additional work is provided (S1302). Further, the value comparison unit 30 analyzes the change of the difference between the operational value and the work cost due to the addition or the change of work. In the analysis method, in addition to the processing shown in Fig. 15, the processing described in Fig. 1 to Fig. 14 may be performed.

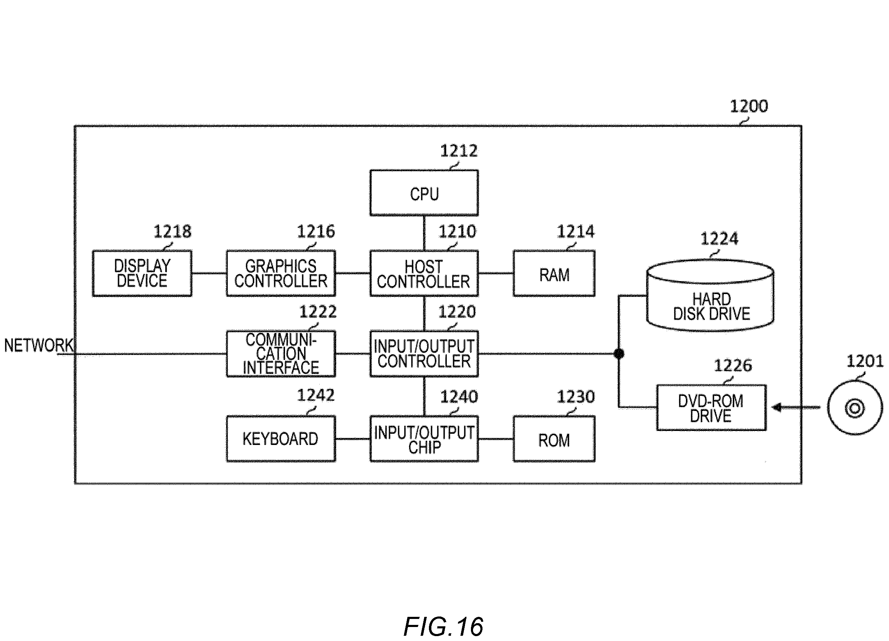

Fig. 16 shows a configuration example of a computer 1200 in which a plurality of aspects of the present invention may be entirely or partially embodied. A program that is installed in the computer 1200 can cause the computer 1200 to function as operations associated with apparatuses according to the embodiments of the present invention or one or more sections of the apparatuses, or to execute the operations or the one or more sections thereof, and/or can cause the computer 1200 to execute processes according to the embodiments of the present invention or steps of the processes. Such a program may be executed by a CPU 1212 so as to cause the computer 1200 to execute the specific operation associated with some or all of the blocks of flowcharts and block diagrams described in the present specification. In addition, the processes according to the embodiments of the present invention or steps of the processes may be executed on the cloud.

The computer 1200 according to the present embodiment includes the CPU 1212, a RAM 1214, a graphics controller 1216, and a display device 1218, which are interconnected by a host controller 1210. The computer 1200 also includes input and output units such as a communication interface 1222, a hard disk drive 1224, a DVD-ROM drive 1226, and an IC card drive, which are connected to the host controller 1210 via an input and output controller 1220. The computer also includes legacy input and output units such as a ROM 1230 and a keyboard 1242, which are connected to the input and output controller 1220 via an input and output chip 1240.

The CPU 1212 operates according to the programs stored in the ROM 1230 and the RAM 1214, thereby controlling each unit. The graphics controller 1216 obtains image data generated by the CPU 1212 on a frame buffer or the like provided in the RAM1214 or in the graphics controller 1216 itself, and causes the image data to be displayed on the display device 1218.

The communication interface 1222 communicates with other electronic devices via a network. The hard disk drive 1224 stores programs and data used by the CPU 1212 within the computer 1200. The DVD-ROM drive 1226 reads the programs or the data from a DVD-ROM 1201, and provides the hard disk drive 1224 with the programs or the data via the RAM 1214. The IC card drive reads the programs and the data from an IC card, and/or writes the programs and the data to the IC card.

The ROM 1230 stores, in itself, a boot program or the like that is executed by the computer 1200 during activation, and/or a program that depends on hardware of the computer 1200. The input and output chip 1240 may also connect various input and output units to the input and output controller 1220 via a parallel port, a serial port, a keyboard port, a mouse port, and the like.

A program is provided by the computer-readable storage medium such as the DVD-ROM 1201 or the IC card. The program is read from the computer-readable storage medium, installed in the hard disk drive 1224, the RAM 1214, or the ROM 1230, which is also an example of the computer-readable storage medium, and executed by the CPU 1212. Information processing written in these programs is read by the computer 1200, resulting in cooperation between a program and the above-mentioned various types of hardware resources. A device or a method may be constituted by realizing the operation or process of the information according to the use of the computer 1200.

For example, when a communication is executed between the computer 1200 and an external device, the CPU 1212 may execute a communication program loaded in the RAM 1214, and instruct the communication interface 1222 to process the communication based on the processing written in the communication program. The communication interface 1222, under control of the CPU 1212, reads transmission data stored on a transmission buffering region provided in a recording medium such as the RAM 1214, the hard disk drive 1224, the DVD-ROM 1201, or the IC card, and transmits the read transmission data to a network or writes reception data received from a network to a reception buffering region or the like provided on the recording medium.

In addition, the CPU 1212 may cause all or a necessary portion of a file or a database to be read into the RAM 1214, the file or the database having been stored in an external recording medium such as the hard disk drive 1224, the DVD-ROM drive 1226 (the DVD-ROM 1201), the IC card, etc., and execute various types of processing on the data on the RAM 1214. Then, the CPU 1212 may write back the processed data to the external recording medium.

Various types of information, such as various types of programs, data, tables, and databases, may be stored in the recording medium to undergo information processing. The CPU 1212 may execute various types of processing on the data read from the RAM 1214 to write back a result to the RAM 1214, the processing being described throughout the present disclosure, specified by instruction sequences of the programs, and including various types of operations, information processing, condition determinations, conditional branching, unconditional branching, information retrievals/replacements, or the like. In addition, the CPU 1212 may search for information in the file, the database, or the like in the recording medium. For example, when a plurality of entries each having an attribute value of a first attribute associated with an attribute value of a second attribute are stored in the recording medium, the CPU 1212 may search, from the plurality of entries, for an entry that matches a condition in which the attribute value of the first attribute is specified, and read the attribute value of the second attribute stored in the entry, thereby acquiring the attribute value of the second attribute associated with the first attribute that satisfies a predetermined condition.

The program or software module described above may be stored in a computer-readable storage medium on the computer 1200 or near the computer 1200. In addition, a recording medium such as a hard disk or a RAM provided in a server system connected to a dedicated communication network or the Internet can be used as a computer-readable storage medium, thereby providing the program to the computer 1200 via the network.

While the embodiments of the present invention have been described, the technical scope of the invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 work cost calculation unit, 12 work cost storage unit, 14 work history storage unit, 20 operational value analysis unit, 21 first value analysis unit, 22 second value analysis unit, 30 value comparison unit, 40 work list generation unit, 42 work independence determination unit, 50 pattern extraction unit, 52 risk storage unit, 54 risk assessment generation unit, 60 pattern generation unit, 62 related work storage unit, 100 analysis apparatus, 1200 computer, 1201 DVD-ROM, 1210 host controller, 1212 CPU, 1214 RAM, 1216 graphics controller, 1218 display device, 1220 input and output controller, 1222 communication interface, 1224 hard disk drive, 1226 DVD-ROM drive, 1230 ROM, 1240 input and output chip, 1242 keyboard

## Claims

1. An analysis apparatus comprising:
a work cost calculation unit configured to calculate a change of a work cost of a target plant, when at least some target work is changed or at least some additional target work is provided among items of work of an operator which are required to operate the target plant;
an operational value analysis unit configured to analyze an operational value which depends on at least one of an amount or a quality of a deliverable or an emission produced by the target plant under a specified condition; and
a value comparison unit configured to compare a first work cost and a first operational value when the target work is not changed or the additional target work is not provided, with a second work cost and a second operational value when the target work is changed or the additional target work is provided.

2. The analysis apparatus according to claim 1, wherein
the work cost calculation unit is configured to calculate the second work cost for each of a plurality of work patterns in which at least either items of the target work, or contents of the change or the addition are different from each other, and
the operational value analysis unit is configured to calculate the second operational value for each of the plurality of work patterns.

3. The analysis apparatus according to claim 2, further comprising:
a pattern extraction unit configured to extract at least one work pattern based on each second work cost and each second operational value.

4. The analysis apparatus according to claim 2 or 3, further comprising:
a related work storage unit configured to store a plurality of items of related work, among the items of work of the operator, in association with each other; and
a pattern generation unit configured to generate the plurality of work patterns based on the plurality of items of related work.

5. The analysis apparatus according to any one of claims 1 to 4, wherein
the work cost calculation unit is configured to calculate the first work cost based on a first workload of the operator when the target work is not changed or the additional target work is not provided, and calculate the second work cost based on a second workload when the target work is changed or the additional target work is provided.

6. The analysis apparatus according to claim 5, further comprising:
a work history storage unit configured to store a history of work performed by the operator during an operation of the target plant, wherein
the work cost calculation unit is configured to calculate the first workload based on the history of the work stored by the work history storage unit.

7. The analysis apparatus according to claim 5, further comprising:
a work history storage unit configured to store a history of work performed by the operator during an operation of an existing plant, wherein
the work cost calculation unit is configured to calculate the first workload and the second workload based on the history of the work stored by the work history storage unit.

8. The analysis apparatus according to claim 7, wherein
the work history storage unit is configured to store, when work in the existing plant is changed or additional work is provided, a history of the work before the change or the addition, and a history of the work after the change or the addition, and
the work cost calculation unit is configured to calculate the first workload and the second workload based on the history of the work stored by the work history storage unit.

9. The analysis apparatus according to claim 3, further comprising:
a risk storage unit configured to store risk assessment information for assessing a risk which occurs when a plurality of items of the target work of the target plant are changed or the items of additional target work are provided, wherein
the pattern extraction unit is configured to extract the work pattern further based on the risk assessment information.

10. The analysis apparatus according to claim 9, wherein
the risk storage unit is configured to store, as the risk assessment information, information relating to a case where work in an existing plant is changed or additional work is provided.

11. The analysis apparatus according to claim 9, further comprising:
a risk assessment generation unit configured to simulate an operation of target equipment which is a target of work, and generate the risk assessment information of the work, based on an actual operation result of the target equipment when the work is performed, and an operation result by the simulation.

12. The analysis apparatus according to claim 9, further comprising:
a risk assessment generation unit configured to generate, for target equipment which is a target of work, the risk assessment information of the work on the target equipment, based on a difference between an intermediate manufactured product which is input to the target equipment and a processed manufactured product which is output by the target equipment.

13. An analysis method comprising:
calculating a change of a work cost of a target plant, when at least some target work is changed or at least some additional target work is provided among items of work of an operator which are required to operate the target plant;
analyzing an operational value which depends on at least one of an amount or a quality of a deliverable or an emission produced by the target plant under a specified condition; and
comparing a first work cost and a first operational value when the target work is not changed or the additional target work is not provided, with a second work cost and a second operational value when the target work is changed or the additional target work is provided.

14. A program for causing a computer to execute the analysis method according to claim 13.
